# EUROPEAN PATENT SPECIFICATION

(11) **EP 0 618 280 B1**
(45) Date of publication and mention of the grant of the patent: **17.06.1998**
(21) Application number: 94105090.8
(22) Date of filing: 30.03.1994
(51) Int. Cl.: C09D 183/06, C09D 183/08

(54) **Primer composition for urethane resins**
Grundierzusammensetzung für Urethanharze
Composition d'une peinture de fond pour des résines uréthanes

(30) Priority: 31.03.1993 JP 96593/93
(43) Date of publication of application: 05.10.1994
(73) Proprietor: Dow Corning Toray Silicone Company, Limited, Tokyo 103 (JP)
(72) Inventor: Yoshitake, Makoto, Toray Dow Corning Silicone, Ichihara-shi, Chiba-Prefecture (JP)
(74) Representative: Spott, Gottfried, Dr.

(56) References cited:
- EP-A- 0 544 526
- EP-A- 0 565 327
- DE-A- 3 602 490
- US-A- 5 051 129
- CHEMICAL ABSTRACTS, vol. 84, no. 26, 28 June 1976 Columbus, Ohio, US; abstract no. 181446c, SEVERVI V.V. 'Dimethylpolysiloxane composition' page 56; & SU-A-502 920 15 February 1976

## Description

This invention relates to a primer composition for use with urethane resins and for adhering or bonding urethane resins to a variety of substrates including silicone rubbers.

Urethane resins are widely used in paints, coatings, and sealants because they exhibit excellent curability, elasticity, and wear resistance. A disadvantage of urethane resins is their poor adhesion to substrates and materials such as metals, plastics, and organic and silicone rubbers. As a result, when it is required to adhere urethane resins to a substrate of material, the surface is generally first treated with an undercoating agent referred to as a primer.

Primer compositions proposed for use with urethane resins include as the adhesion promoting ingredient a silane coupling agent containing an amino, epoxy, or isocyanate group. A disadvantage of primer compositions containing these silanes is their tendency to deteriorate during storage and loss of their adhesion, making them unsuitable for their intended use. In the particular case of silicone rubber substrates, these primer compositions also exhibit unsatisfactory adhesion, a disadvantage that has yet to be overcome.

The prior art for such primer compositions is represented by Japanese Patent Publication [Kokai] 52/065529; United States Patent 4,727,168; and Japanese Patent Publication [Kokai] 75/035092.

The present invention resulted from extensive research directed at eliminating the problem of reduced adhesion following storage of primer compositions. An objective of this invention is to provide a primer composition for urethane resins that is able to firmly adhere or bond urethane resins to a variety of substrates.

Our primer composition comprises a solvent and either an organosilane corresponding to the general formula I

I (R¹O)ₓR² ₃₋ₓSiR³(XR⁴)_{y}COOH

or a partial hydrolysis/condensation product of said organosilane, wherein R¹ is an alkyl or alkoxyalkyl radical; R² is a monovalent hydrocarbon radical; R³ is an alkylene radical; X is O, S, or NH; R⁴ is an alkylene radical; x is 2 or 3; and y is 0 or 1.

The organosilane used in the present composition contains both a carboxyl group and silicon-bonded alkoxy groups. The alkyl radicals represented by R¹ in formula I include methyl, ethyl and propyl. The alkoxyalkyl radicals represented by R¹ include ethoxymethyl, methoxyethyl, and methoxypropyl.

R² in formula I represents a monovalent hydrocarbon radical that includes methyl, ethyl, and propyl. R³ and R⁴ are identical or different alkylene radicals that include methylene, ethylene and propylene. X represents O, S, or NH; x = 3 or 2; y = 0 or 1; and z = 1 or 2. Examples of the organosilanes represented by formula I are:

(CH₃O)₃Si(CH₂)₁₀COOH,

(C₂H₅O)₃Si(CH₂)₁₀COOH,

(CH₃O)₃Si(CH₂)₃COOH,

(C₂H₅O)₃Si(CH₂)₃COOH,

(CH₃O)₂CH₃Si(CH₂)₁₀COOH,

(C₂H₅O)₂CH₃Si(CH₂)₁₀COOH,

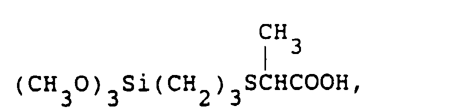

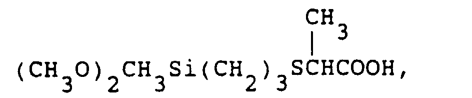

and the partial hydrolysis/condensation products of the preceding carboxy-functional silanes.

Partial hydrolysis/condensation products of the organosilanes represented by formula I can be prepared by adding water to the organosilane in the presence of an acid or base as a catalyst. The reaction mixture preferably contains no more than 0.5 mole of water, most preferably no more than 0.3 mole of water, per mole of hydrolyzable groups present in the organosilane.

The solvent portion of the present composition is used to dilute the organosilane or its partial hydrolysis/condensation product, thereby improving the working characteristics of the primer composition. Suitable solvents include aliphatic hydrocarbons such as hexane and heptane; aromatic hydrocarbons such as toluene and xylene; ketones such as acetone and methyl isobutyl ketone; alcohols such as methanol, isopropanol, butanol, methyl Cellosolve and butyl Cellosolve; and volatile organoalkoxysilanes such as methyltrimethoxysilane. The solvents can be used individually or as mixtures containing two or more solvents. The concentration of solvent in the present compositions is from 1 to 10,000 weight parts, preferably from 10 to 10,000 weight parts, most preferably from 100 to 5,000 weight parts, of solvent per 100 weight parts of the silane or partial hydrolysis/condensation product.

The primer compositions of this invention are prepared simply by dissolving the organosilane on its partial hydrolysis/condensation product in the solvent.

The primer compositions are applied to the surface of substrates or materials, such as silicone rubber, using conventional methods like brushing, dipping and spraying. The composition is then allowed to dry. A structure in which the substrate and urethane resin are unified into a single body is obtained by applying the paint or other material containing the urethane resin to the primed surface and then curing the resin.

### Examples

The following examples illustrate preferred compositions of the present invention. All parts in the examples are by weight and the adhesive strength of the bonding between the urethane resin and the substrate was measured using the method described in Japan Industrial Standards (JIS) Test Method K 5400. In this procedure a grid containing 100 squares is inscribed on a 1 cm² area of the painted surface using two sets of 11 parallel lines spaced 1 mm apart. The two sets of lines are perpendicular with respect to one another. Cellophane tape is then applied over the inscribed area and then peeled off by manually pulling at one end of the tape. The number of paint squares remaining is then visually counted.

### Example 1

A primer composition was prepared by mixing 10 parts of 11-triethoxysilylundecanoic acid, 30 parts of ethyl acetate, and 60 parts of hexane to homogeneity. This primer composition was sprayed onto a vulcanized silicone rubber sheet and dried for 10 minutes at 60°C. The dry film of primer composition was 50 micrometers thick. A two-part reactive urethane resin paint available as Matilo II™ from Cashew Kabushiki Kaisha was sprayed onto this surface and dried, first for 40 minutes at 60°C and then for 20 minutes at 80°C. The adhesion between the urethane paint and the silicone rubber was subsequently evaluated using the adhesion test described above, and the result is recorded in Table 1.

### Example 2

10 Parts 2-(3-trimethoxysilylpropylthio)lactic acid were dissolved in 40 parts methanol; 1 part of 1% aqueous hydrochloric acid was added to this solution; and the resultant mixture was reacted for 5 hours at 50°C. Concentration of the resultant mixture under reduced pressure yielded the partial hydrolysis/condensation product of 2-(3-trimethoxysilylpropyl-thio)lactic acid. This reaction product was blended with 50 parts of methyl isobutyl ketone and 40 parts of hexane to form a homogeneous primer composition of this invention. This primer composition was sprayed onto a vulcanized sheet of silicone rubber and dried for 10 minutes at 60°C. The primer layer was 50 micrometers thick. The same two-part reactive urethane resin paint described in Example 1 was sprayed onto the primer composition and dried first for 40 minutes at 60°C and then for 20 minutes at 80°C. The adhesion between the urethane paint and the silicone rubber was then evaluated using the procedure of Example 1 and the result is reported in Table 1.

### Comparison Example 1

The adherence of a urethane paint to silicone rubber was evaluated as described in Example 1 without using the primer composition described in that example, and the result is reported in Table 1.

### Comparison Example 2

The following ingredients were added sequentially to 92.3 parts of ethanol: 3.5 parts N-(beta-aminoethyl)-gamma-aminopropyltrimethoxysilane, 3.7 parts gamma-glycidoxypropyltrimethoxysilane, and 0.5 parts water. The resultant mixture was stirred for 8 hours at room temperature to obtain a primer composition. This composition was sprayed onto a vulcanized silicone rubber sheet and dried for 10 minutes at 60°C. The primer layer was 50 micrometers thick. The two-part urethane resin paint described in Example 1 was sprayed onto this surface and dried for 40 minutes at 60°C and then for 20 minutes at 80°C. The adhesion between the urethane paint and the silicone rubber was then evaluated by the method used in Example 1 and the result is recorded in Table 1 below.

**Table 1**

| Percentage of 100 Squares Remaining Following Adhesion Test | |
|---|---|
| Example 1 | 100 |
| Example 2 | 97 |
| Comparison Example 1 | 7 |
| Comparison Example 2 | 25 |

## Claims

1. A primer composition for adhering urethane resins to materials other than said urethane resins, where said composition comprises a solvent and at least one adhesion additive selected from organosilanes corresponding to the general formula
(R¹O)ₓR² ₃₋ₓSiR³(XR⁴)_{y}COOH
where R¹ is an alkyl or alkoxyalkyl radical; R² is a monovalent hydrocarbon radical; R³ is an alkylene radical; X is O, S, or NH; R⁴ is an alkylene radical; x is 2 or 3; and y is 0 or 1, the partial hydrolysis and condensation products of said organosilanes.

2. A primer composition according to claim 1 where said materials are silicone rubbers, R¹ is selected from methyl, ethyl, propyl, methoxymethyl, methoxyethyl and methoxypropyl; R² contains from 1 to 3 carbon atoms; R³ and R⁴ are individually selected from methylene, ethylene and propylene; said solvent is selected from aliphatic hydrocarbons, aromatic hydrocarbons, ketones, alcohols, and volatile alkylalkoxysilanes; and said composition contains from 10 to 10,000 parts by weight of said solvent per 100 parts by weight of said adhesion additive.

3. A composition according to claim 2 where said organosilane is represented by a formula selected from
(CH₃O)₃Si(CH₂)₁₀COOH,
(C₂H₅O)₃Si(CH₂)₁₀COOH,
(CH₃O)₃Si(CH₂)₃COOH,
(C₂H₅O)₃Si(CH₂)₃COOH,
(CH₃O)₂CH₃Si(CH₂)₁₀COOH,
(C₂H₅O)₂CH₃Si(CH₂)₁₀COOH, 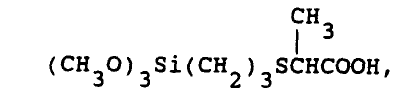
and

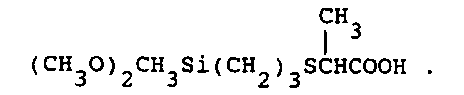

## Patentansprüche

1. Primerzusammensetzung zum Anhaften von Urethanharzen an andere Materialien als Urethanharze, wobei die Zusammensetzung ein Lösungsmittel und einen haftvermittelnden Zusatz umfaßt, ausgewählt aus Organosilanen der allgemeinen Formel
(R¹O)ₓR² ₃₋ₓSiR³(XR⁴)_{y}COOH
in der R¹ für einen Alkyl- oder Alkoxyalkylrest, R² für einen einwertigen Kohlenwasserstoffrest, R³ für einen Alkylenrest, X für O, S oder NH, R⁴ für einen Alkylenrest, x für 2 oder 3 und y für 0 oder 1 steht, den partiellen Hydrolyse- und Konsensationsprodukten der Organosilane.

2. Primerzusammensetzung nach Anspruch 1, wobei die Materialien Siliconkautschuke sind, R¹ aus Methyl, Ethyl, Propyl, Methoxymethyl, Methoxyethyl und Methoxypropyl ausgewählt ist, R² von 1 bis 3 Kohlenstoffatome aufweist, R³ und R⁴ einzeln aus Methylen, Ethylen und Propylen ausgewählt sind, das Lösungsmittel aus aliphatischen Kohlenwasserstoffen, aromatischen Kohlenwasserstoffen, Ketonen, Alkoholen und flüchtigen Alkylalkoxysilanen ausgewählt ist und die Zusammensetzung von 10 bis 10000 Gewichtsteilen des Lösungsmittels pro 100 Gewichtsteilen des haftvermittelnden Zusatzes enthält.

3. Zusammensetzung nach Anspruch 2, wobei das Organosilan ausgewählt ist aus:
(CH₃O)₃Si(CH₂)₁₀COOH,
(C₂H₅O)₃Si(CH₂)₁₀COOH,
(CH₃O)₃Si(CH₂)₃COOH,
(C₂H₅O)₃SI(CH₂)₃COOH,
(CH₃O)₂CH₃Si(CH₂)₁₀COOH,
(C₂H₅O)₂CH₃Si(CH₂)₁₀COOH, 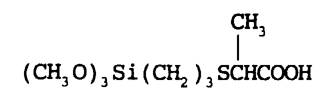
und

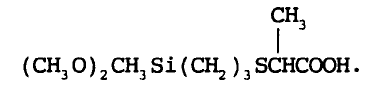

## Revendications

1. Composition de primaire pour faire adhérer des résines d'uréthane à des matières autres que lesdites résines d'uréthane, ladite composition comprenant un solvant et au moins un additif d'adhésion choisi parmi les organosilanes correspondant à la formule générale
(R¹O)ₓR² ₃₋ₓSiR³(XR⁴)_{y}COOH
où R¹ est un radical alkyle ou alcoxyalkyle ; R² est un radical hydrocarboné monovalent ; R³ est un radical alkylène ; X est O, S ou NH ; R⁴ est un radical alkylène ; x est 2 ou 3 ; et y est 0 ou 1, et les produits d'hydrolyse et de condensation partielles desdits organosilanes.

2. Composition de primaire selon la revendication 1, dans laquelle lesdites matières sont des caoutchoucs de silicone, R¹ est choisi parmi les radicaux méthyle, éthyle, propyle, méthoxyméthyle, méthoxyéthyle et méthoxypropyle ; R² contient de 1 à 3 atomes de carbone ; R³ et R⁴ sont individuellement choisis parmi les groupes méthylène, éthylène et propylène ; ledit solvant est choisi parmi les hydrocarbures aliphatiques, les hydrocarbures aromatiques, les cétones, les alcools et les alkylalcoxysilanes volatils ; et ladite composition contient de 10 à 10 000 parties en poids dudit solvant pour 100 parties en poids dudit additif d'adhésion.

3. Composition selon la revendication 2, dans laquelle ledit organosilane est représenté par une formule choisie parmi
(CH₃O)₃Si(CH₂)₁₀COOH,
(C₂H₅O)₃Si(CH₂)₁₀COOH,
(CH₃O)₃Si(CH₂)₃COOH,
(C₂H₅O)₃Si(CH₂)₃COOH,
(CH₃O)₂CH₃Si(CH₂)₁₀COOH,
(C₂H₅O)₂CH₃Si(CH₂)₁₀COOH, 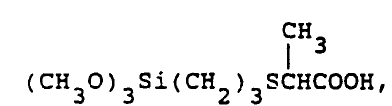
et
